# EUROPEAN PATENT APPLICATION

(11) **EP 1 677 413 A1**
(43) Date of publication of application: **05.07.2006**
(21) Application number: 05026189.0
(22) Date of filing: 01.12.2005
(51) Int. Cl.: H02P 9/48

(54) **Permanent magnet generator**

(30) Priority: 23.12.2004 IT VE20040052
(71) Applicant: IDM S.R.L., 31044 Montebelluna (IT)
(72) Inventor: Bordin, Mauro, 31044 Montebelluna (IT); Imoli, Dante, 31044 Montebelluna (IT); Pozzobon, Flavio, 31044 Montebelluna (IT)
(74) Representative: Piovesana, Paolo

(57) **Abstract**

A direct and/or alternating current generator using an alternator comprising a permanent magnet rotor and a polyphase multipolar stator, characterised in that the stator is provided with a single power winding, the terminals of which are connected to at least one recttifier circuit (6) provided with a filter circuit (8) and having a multiple output connected to at least one inverter (10ᵢ) for generating an alternating current and/or to at least one power supply circuit (12ᵢ) for generating a direct current.

## Description

The present invention relates to a direct and/or alternating current generator with permanent magnets.

Generators for mobile use are known, coupled to an internal combustion engine or another source of mechanical energy for their rotation, and able to selectively power equipment operating by direct current (DC) or alternating current (AC). They consist of permanent magnet polyphase alternators with their stator comprising at least two separate main windings wound generally one on the other and having their ends connected to two separate electronic circuits. One of the two windings is used for example to provide AC power and the other to provide DC power.

The need to use these two separate windings and the two corresponding electronic conversion circuits is a drawback in terms of overall size, weight, constructional difficulty and cost.

An object of the invention is to eliminate or at least reduce these drawbacks by providing a generator using a permanent magnet alternator with a single main stator winding able to provide, simultaneously or not, alternating current and direct current voltages of variable power.

Another object of the invention is to propose a generator able to provide under any utilization condition a power virtually equal to the generator rated power.

These and other objects which will be apparent from the ensuing description are attained according to the invention by a direct and/or alternating current generator as described in claim 1.

Two preferred embodiments of the present invention are described in detail hereinafter with reference to the accompanying drawing, in which:

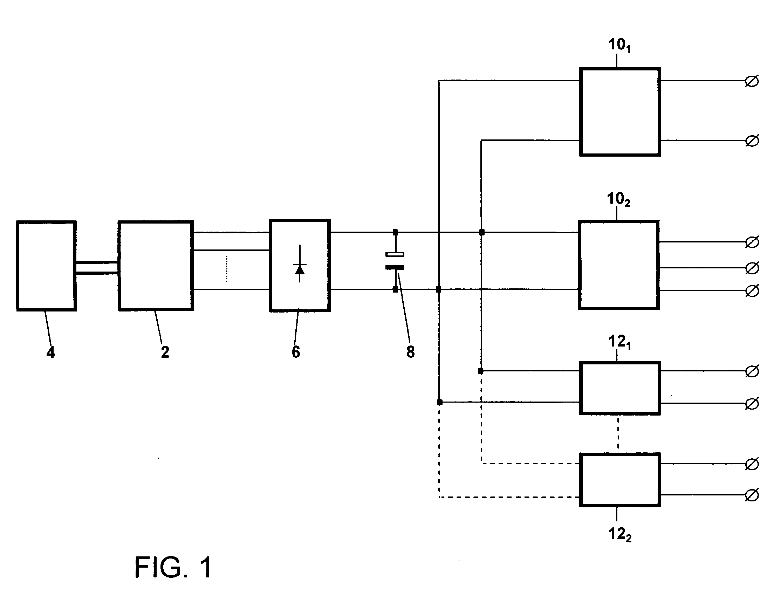

- Figure 1: is a schematic block diagram of the generator according to the invention, and

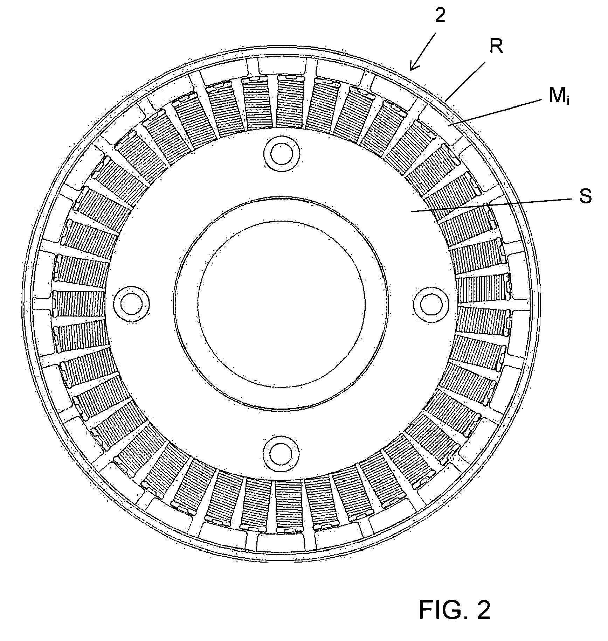

- Figure 2: is a schematic cross-section through the alternator used in the generator of the invention.

As can be seen from the figures, the generator of the invention comprises an alternator 2 with a rotor R comprising permanent magnets Mᵢ and a three-phase multipolar stator S.

The permanent magnet rotor is mechanically coupled to the output shaft of an engine 4, which can be of internal combustion or other type.

The stator of the alternator 2 is provided with a single three-phase power winding through which an alternating current can circulate, induced by the rotation of the permanent magnet rotor. Other auxiliary windings could also be provided, the purpose of which can for example be to simplify the powering of the electronic control circuits.

The ends of the main stator winding are connected across a single polyphase rectifier bridge 6, preferably controlled, itself connected across a filter circuit 8 in the form of a capacitor.

A number of inverters 10ᵢ and a number of switch mode power supply circuits 12ᵢ are connected to the filter circuit 8.

The described embodiment shows two inverters 10₁ and 10₂ and two switch mode power supply circuits 12₁ and 12₂, however their number depends on the particular utilization requirements. The purpose of each inverter 10ᵢ is to transform the substantially constant output voltage of the filter circuit 8 into an alternating voltage of particular characteristics, in the illustrated example the inverter 10₁ being provided to generate a single-phase AC voltage and the inverter 10₂ being provided to generate a three-phase AC voltage.

The purpose of each switch mode power supply circuit 12ᵢ is to transform the output DC voltage of the filter circuit 8 into a substantially constant output voltage, but of different value.

This can comprise an oscillator, which converts the DC feed voltage into AC voltage of amplitude depending on the feed voltage value and on the oscillator characteristics, and can also comprise a transformer to set the AC voltage generated by the oscillator to the required value, plus a final rectifier and filter, to smooth the transformer output voltage and hence provide the required DC voltage.

A user item requiring alternating current or direct current is connected to each of the inverters 10ᵢ and switch mode power supply circuits 12ᵢ.

The voltage feeding the inverters 10ᵢ and switch mode power supply circuits 12ᵢ preferably has a value higher than the utilization voltage, i.e. than the output voltage of said inverters 10ᵢ and of said switch mode power supply circuits 12ᵢ.

From the aforegoing it is apparent that the generator of the invention is particularly advantageous compared with traditional generators, as it enables the stator to be constructed with a single winding, hence reducing problems of cost, weight and constructional difficulty.

Moreover it uses a single rectifier bridge 6 and a single filter 8 for the entire downstream electronic circuits 10ᵢ, 12ᵢ, in contrast to traditional generators, in which one rectifier bridge is provided for each current type to be obtained.

Essentially, the generator of the invention differs from traditional generators in that these, having to generate AC and DC voltages of substantially different values (220 V for the AC voltage and 12-28 V for the DC voltages), generally use separate windings dedicated to generating one or other type of voltage.

Two important consequences derive therefrom: the first is that generally the two windings cannot be used simultaneously, as the current circulating through one of these distorts and alternates that circulating through the other. The second is that the maximum power which can be generated in each of these windings is certainly much less than the generator rated power.

Instead, the generator of the invention uses a single main stator winding, a single rectifier bridge 6 and a single filter 8 for feeding the inverters 10ᵢ and the switch mode power supply circuits 12ᵢ, as generally a switch mode power supply circuit also comprises an upstream rectifier, which in the case of the generator of the invention is eliminated, given the existence of the single rectifier 6.

It follows that in the generator of the invention, as there is only one winding, which can be used without distinction to generate DC or AC voltages, or DC and AC voltages simultaneously, in all cases the maximum power which can be generated is close to the generator rated power.

A particular example of utilization of the generation system of the invention is in motor welding sets. For these sets, which are used in places where they cannot be connected to mains electricity, in addition to the requirement of an output current at a voltage of about 30 VDC for welding, a power output is also required at a voltage equal to that of the mains voltage of the country in which the motor welding set is used. This is because after the welding operation it is usually necessary to carry out finishing operations on the welded part using equipment such as a grinding machine, a source of lighting also possibly being required. Again in this case the generator of the invention provides current at both the output voltages. The output power for both voltages can be the maximum which can be delivered by the alternator, and moreover, if said powers are only partially used they can be delivered simultaneously

Essentially, independently of the particular embodiment, the generator of the invention enables one or more direct current users and one or more alternating current users to be powered at choice. It follows that the maximum power deliverable by the alternator can be used by one or more users simultaneously.

Two preferred embodiments of the invention have been illustrated and described, however modifications can be made thereto in practice, but without leaving the scope of protection of the present industrial invention patent.

## Claims

1. A direct and/or alternating current generator using an alternator comprising a permanent magnet rotor and a polyphase multipolar stator, **characterised in that** the stator is provided with a single power winding, the terminals of which are connected to at least one recttifier circuit (6) provided with a filter circuit (8) and having a multiple output connected to at least one inverter (10ᵢ) for generating an alternating current and/or to at least one power supply circuit (12ᵢ) for generating a direct current.

2. A generator as claimed in claim 1, **characterised in that** the rectifier circuit (6) is of controlled type.

3. A generator as claimed in claim 1, **characterised in that** the filter circuit (8) comprises at least one capacitor.

4. A generator as claimed in claim 1, **characterised in that** the output voltage of the filter circuit (8) is of higher value than the output voltage of said inverter (10ᵢ) and of said power supply circuit (12ᵢ).

5. A generator as claimed in one or more of claims 1 to 4, **characterised in that** the power supply circuit is of the type without an input rectifier.

6. A generator as claimed in claim 1, **characterised in that** the power supply circuit (12ᵢ) for direct current generation is of switch mode type.

7. A generator as claimed in claim 1, **characterised in that** the power supply circuit (12ᵢ) for direct current generation is of linear type.

8. A generator as claimed in claim 1, **characterised in that** both the inverter (10ᵢ) for alternating current generation and the power supply circuit (12ᵢ) for direct current generation are dimensioned to supply the maximum rated power for said alternator.

9. A generator as claimed in claim 1, **characterised in that** both the inverter (10ᵢ) for alternating current generation and the power supply circuit (12ᵢ) for direct current generation are connected simultaneously to respective users.

10. A generator as claimed in claim 1, **characterised in that** said rotor is internal to said stator.
